# EUROPÄISCHE PATENTSCHRIFT

(11) **EP 2 844 959 B1**
(45) Veröffentlichungstag und Bekanntmachung des Hinweises auf die Patenterteilung: **31.03.2021**
(21) Anmeldenummer: 12722690.0
(22) Anmeldetag: 30.04.2012
(51) Int. Cl.: G01F 1/60, G01F 1/58

(54) **MESSVORRICHTUNG UND - VERFAHREN ZUR MESSUNG DER FLIEßGESCHWINDIGKEIT EINES MEDIUMS**
MEASURING APPARATUS AND METHOD FOR MEASURING THE FLOW VELOCITY OF A MEDIUM
DISPOSITIF ET PROCÉDÉ DE MESURE DE LA VITESSE D'ÉCOULEMENT D'UN FLUIDE

(43) Veröffentlichungstag der Anmeldung: 11.03.2015
(73) Patentinhaber: EICON GmbH, 85646 Vaterstetten (DE)
(72) Erfinder: WOLFF, Marcus, 22149 Hamburg (DE); BRUHNS, Henry, 21218 Seevetal (DE)
(74) Vertreter: Stellbrink & Partner Patentanwälte mbB
(86) Internationale Anmeldenummer: PCT/EP2012/057939
(87) Internationale Veröffentlichungsnummer: WO 2013/164011

(56) Entgegenhaltungen:
- DE-A1- 2 557 328
- DE-T2- 69 635 043
- US-B1- 6 463 807
- US-B1- 6 722 207

## Beschreibung

Die vorliegende Erfindung betrifft eine Messvorrichtung zur Messung der Fließgeschwindigkeit eines elektrisch leitfähigen Mediums in einem von einem Magnetfeld durchsetzten Volumen, aufweisend ein Mittel zur Erzeugung des Magnetfelds, zumindest zwei Elektroden und eine Auswertungseinheit, die ein Signal der Elektroden auswertet und die Fließgeschwindigkeit berechnet.

Die Erfindung betrifft außerdem ein Verfahren zur Messung der Fließgeschwindigkeit eines elektrisch leitfähigen Mediums in einem von einem Magnetfeld durchsetzten Volumen.

### Hintergrund

Im Stand der Technik sind verschiedene Verfahren zur Messung von Fließgeschwindigkeit bekannt.

US 6,463,807 (B1) offenbart einen magnetischen Durchflusssensor, der einen Permanentmagneten verwendet, um den magnetischen Fluss bereitzustellen, und ist konfiguriert, um elektrodenbezogene Abweichungen zu kompensieren. Die Elektrodensignale werden zyklisch kurzgeschlossen und die durchflussratenbezogenen Spannungen werden während kurzer Signalabtastperioden von verschiedenen Driftsignalen isoliert. Einige Ausführungsformen der Erfindung verwenden mehrere Sensorköpfe in einem einzigen Sensor, um die Größe des strömungsbezogenen Signals zu erhöhen.

DE 696 35 043 (T2) offenbart einen elektromagnetischen Durchflussmesser, der die elektrische Leitfähigkeit eines Fluids basierend auf dem Verhältnis eines Ausgangssignals berechnet, das erzeugt wird, wenn die Elektroden 2a, 2b über Kurzschlusswiderstände Rs1, Rs2 geerdet werden, zu einem Ausgangssignal, das erzeugt wird, wenn die Elektroden 2a, 2b nicht geerdet sind und korrigiert eine Durchflussmessung unter Verwendung der elektrischen Leitfähigkeit genauer, die dadurch gekennzeichnet ist, dass zur Verringerung von Messfehlern aufgrund von Schwankungen der DC-Offset-Spannung, begleitet von einem Ein / Aus-Betrieb des Kurzschlussschalters S1, die Ausgänge gemessen werden, wenn der Kurzschluss Der Schaltungsschalter S1 ist in einem Magnetisierungszustand ein- und ausgeschaltet, der Ausgang wird als nächstes gemessen, wenn der Kurzschlussschalter S1 in einer Nichtmagnetisierungsstufe ein- und ausgeschaltet ist, und die Ausgänge im Nichtmagnetisierungszustand werden von den Ausgängen in subtrahiert den Magnetisierungszustand, wodurch der Einfluss der "DC-Offset-Spannungsschwankung", die mit dem Ein- / Ausschalten des Kurzschlussschalters S1 einhergeht, beseitigt wird.

Derartige Verfahren und Messvorrichtungen zur Messung der Fließgeschwindigkeit eines Mediums sind unter dem Begriff "Magnetisch induktive Durchflussmessung" schon seit längerem bekannt. Magnetisch induktive Durchflussmesser weisen dabei typischerweise ein Messrohr auf, durch das das elektrisch leitfähige Medium hindurchfließt. Das Magnetfeld wird typischerweise über Spulen oder Permanentmagneten erzeugt. Gemäß dem Faradayschen Gesetz kommt es dabei zu einer Trennung der bewegten Ladungen im Magnetfeld. Die zumindest zwei Elektroden sind typischerweise an gegenüberliegenden Seiten des Messrohrs angeordnet und messen eine Spannung, die im Idealfall proportional ist zu der Strömungsgeschwindigkeit der Ladungsträger, d.h. zu der Fließgeschwindigkeit des elektrisch leitfähigen Mediums. Derartige Verfahren setzen dabei nur eine sehr geringe elektrische Leitfähigkeit voraus, sodass z. B. auch die Fließgeschwindigkeit von Leitungswasser bestimmt werden kann.

Die Auskopplung des zu messenden Signals kann entweder galvanisch oder kapazitiv erfolgen. Bei einer galvanischen Auskopplung stehen die Elektroden in elektrischem Kontakt mit dem Medium. Hierbei ist also eine gewisse Mindestleitfähigkeit des Mediums erforderlich. Außerdem müssen die Elektroden aufgrund ihres ständigen Kontakts mit dem Medium ausreichend korrosionsbeständig sein. Bei kapazitiver Signalauskopplung sind die Elektroden als großflächige Platten eines Kondensators ausgebildet und befinden sich auf der Außenseite des Rohres, sind also nicht mit dem Medium in Kontakt.

Die heutzutage typischerweise verwendeten derartigen Messvorrichtungen setzen zur Erzeugung des erforderlichen Magnetfeldes durch Elektromagneten generierte elektromagnetische Wechselfelder ein. Hierdurch kommt es zur Induktion von Störspannungen an den Elektroden. Diese müssen durch Filter gezielt unterdrückt werden. Für einen einfachen und energieeffizienten Betrieb wäre es somit wünschenswert, die mit Wechselspannung betriebenen Elektromagneten durch Permanentmagneten mit einem statischen Magnetfeld zu ersetzen. Bei der Verwendung von Permanentmagneten beobachtet man allerdings zusätzliche Messfehler, die sich als Drift der an den Elektroden gemessenen induzierten Spannung darstellen. Dieser Drift ist ein über die Zeit variierender, zufälliger Gleichspannungswert, der dem eigentlichen, induzierten Messwert überlagert ist. Ursache für diesen Messfehler können elektrostatische oder elektrochemische Ladungen sein. Derartige Messfehler können mit statistischen Methoden nicht herausgerechnet werden.

Es ist daher eine Aufgabe der vorliegenden Erfindung, eine Messvorrichtung und ein Verfahren der eingangs genannten Art bereitzustellen, bei dem die Messung der Fließgeschwindigkeit des Mediums nicht durch derartige Messfehler verfälscht wird.

Nach einem ersten Aspekt der Erfindung wird die Aufgabe dadurch gelöst, dass die zumindest zwei Elektroden der Messvorrichtung mit einem Schalter verbunden sind, der dazu ausgebildet ist, die Elektroden kurzzuschließen.

Nach einem weiteren Aspekt der Erfindung wird die Aufgabe durch ein Verfahren der eingangs genannten Art gelöst, bei dem die Elektroden während eines ersten Zeitraumes, insbesondere eines Zeitraumes zwischen 0,3 und 1 Sekunden, kurzgeschlossen werden, der Kurzschluss während eines zweiten Zeitraumes, insbesondere eines Zeitraumes zwischen 1 und 3 Sekunden, geöffnet wird, ein Nutzsignal von den Elektroden ausgelesen wird und die Fließgeschwindigkeit basierend auf dem ausgelesenen Nutzsignal berechnet wird.

Dem neuen Verfahren und der neuen Messvorrichtung liegt die folgende Erkenntnis zugrunde: die genannten elektrostatischen und elektrochemischen Ladungen treten an den Elektroden der Messvorrichtung auf, insbesondere nahe deren Oberflächen. Durch den erfindungsgemäßen Schalter können die Ladungen aber abgebaut (neutralisiert) werden, indem der Schalter die Elektroden kurzschließt und auf diese Weise einen Potentialausgleich erzwingt. Wenn man diesen Kurzschluss sodann wieder aufhebt, kann davon ausgegangen werden, dass eine sich unmittelbar nach diesem Schaltvorgang ergebende Potentialdifferenz zwischen den Elektroden auf magnetische Induktion zurückführen lässt und somit ein Maß für den Durchfluss darstellt. Die elektrochemischen und elektrostatischen Vorgänge bewirken hierbei keinen Messfehler, da sie langsamer wirken und sich nach Öffnen des Kurzschlusses erst langsam wieder aufbauen. Es spielt dabei keine Rolle, ob die Signalauskopplung nach dem galvanischen oder kapazitiven Prinzip funktioniert. Die Auswertung des nach Öffnen des Kurzschlusses gemessenen Signals kann dabei mit den aus dem Stand der Technik bekannten Verfahren erfolgen.

Es ist somit auf kostengünstige Weise möglich, eine Messvorrichtung mit erhöhter Genauigkeit bereitzustellen. Die oben genannte Aufgabe ist damit vollständig gelöst.

In einer bevorzugten Ausgestaltung der Erfindung ist der Schalter ein elektronischer Schalter. Elektronische Schalter zeichnen sich im Gegensatz zu mechanischen Schaltern (z. B. Relais) durch einen geringeren Energiebedarf, hohe Lebensdauer, kurze Schaltzeiten und geringe Leckströme aus. Typischerweise sind die erfindungsgemäß zu verwendende Schalter immer entweder im geöffneten oder im geschlossenen Zugestand, mit einer nur technisch bedingten sehr kurzen Umschaltphase. In anderen Ausgestaltungen der Erfindung kann aber auch vorgesehen sein, dass gezielt ein kontinuierlicher Übergang zwischen gesperrtem geschlossenem Zustand stattfindet.

In einer weiteren Ausgestaltung umfasst der Schalter zumindest einen Transistor. Der Schalter könnte also einfach aus einem Transistor bestehen oder einen Transistor und weitere Bauteile aufweisen.

In einer bevorzugten Ausgestaltung umfasst der Schalter zumindest einen MOSFET, insbesondere einen MOSFET in einem CMOS-IC. MOSFETs zeichnen sich durch kurze Schaltzeiten und geringe Schaltwiderstände aus. Zudem können sie besonders kostengünstig hergestellt werden.

In einer Ausgestaltung der Erfindung ist vorgesehen, dass der Schalter in geöffnetem Zustand einen Widerstand von zumindest 10 GOhm, insbesondere zumindest 100 GOhm, aufweist. Da die Messung des Signals in geöffnetem Zustand des Schalters erfolgt, der Schalter aber immer noch mit den Elektroden verbunden ist, soll das Signal der Elektroden nicht durch einen zu niedrigen Widerstand des geöffneten Schalters verfälscht bzw. abgeschwächt werden. Anderenfalls wäre eine höhere Verstärkung des Signals der Elektroden erforderlich, die allerdings auch eine erhöhte Verstärkung von Störsignalen mit sich bringt.

In einer Ausgestaltung der Erfindung ist vorgesehen, dass die Messvorrichtung eine Ansteuereinheit für den Schalter aufweist, wobei die Ansteuereinheit zumindest einen Timer umfasst. Durch die Ansteuereinheit kann der Schalter automatisch, z. B. in regelmäßigen Abständen, geschlossen und geöffnet werden. Der Timer kann dabei selbst vorgegebene Zeitabstände zwischen Schließen und Öffnen des Schalters vorgeben. In anderen Ausgestaltungen könnte die von dem Schalter vorgegebene Zeit auch von veränderlichen Werten abhängen, z. B. könnte der Timer bei hohen gemessenen Fließgeschwindigkeiten kürzere Zeitabstände vorgeben als bei niedrigen gemessenen Fließgeschwindigkeiten. Die Ansteuereinheit kann zudem vorgeben, wann die Auswertung von Signalen von den Elektroden erfolgt. Schließlich kann durch den Timer auch ein periodischer Ablauf von Schalteransteuerung und Signalauswertung vorgegeben werden.

In einer bevorzugten Ausgestaltung ist vorgesehen, dass die Ansteuereinheit derart ausgebildet ist, dass der Schalter für die Dauer eines ersten Zeitraumes, insbesondere eines Zeitraumes zwischen 0,3 und 1 Sekunden, geschlossen ist und für die Dauer eines zweiten Zeitraumes, insbesondere eines Zeitraumes zwischen 1 und 3 Sekunden, geöffnet ist, wobei ferner die Auswertungseinheit derart ausgebildet ist, dass das Signal der Elektroden unmittelbar nach dem zweiten Zeitraum ausgewertet wird.

Dieser Ausgestaltung liegen die folgenden Überlegungen zugrunde: durch den Kurzschluss der Elektroden für die Dauer eines ersten Zeitraumes wird ein Potentialausgleich der Elektroden erzwungen und die elektrostatischen und elektrochemischen Ladungen werden abgebaut. Zur Ermittlung der induzierten Spannung wird dieser Kurzschluss dann aufgehoben. Die Auswertung des Signals der Elektroden erfolgt gemäß dieser Ausgestaltung allerdings nicht unmittelbar nach Aufheben des Kurzschlusses, sondern erst nach Ablauf einer Einschwingzeit, die im Wesentlichen von der Kapazität des Messkreises bestimmt wird. Nach Ablauf dieses zweiten Zeitraumes, währenddessen der Schalter geöffnet ist, wird die an den Elektroden anstehende Spannung, z. B. mit einem Analog-/Digitalwandler, konvertiert und ausgewertet, insbesondere auch zur weiteren Verarbeitung gespeichert. Unmittelbar nach dem Speichervorgang können die Elektroden wieder kurzgeschlossen und der geschilderte Vorgang periodisch wiederholt werden. Auf diese Weise kann die induzierte Spannung zeitdiskret gemessen werden. Die kontinuierliche Speicherung vieler diskreter Messwerte ermöglicht dabei eine mathematische Nachbehandlung zur Unterdrückung von statistischen Messfehlern (z. B. digitale Filterung oder Mittelwertberechnung).

Die Wahl der Dauer des ersten Zeitraumes hängt von der Zeit ab, die erforderlich ist, bis die elektrostatischen und elektrochemischen Ladungen genügend abgebaut sind. Dies kann von verschiedenen Faktoren abhängen, z. B. von der Geometrie der Messvorrichtung, der Art des durchfließenden Mediums, der Fließgeschwindigkeit des Mediums und dem Material und der Oberfläche der Elektroden. Demgemäß können in anderen Ausgestaltungen der Erfindung auch wesentlich kürzere oder längere Zeiträume vorgesehen sein. Insbesondere wären auch erste Zeiträume zwischen 100 und 300 Millisekunden oder erste Zeiträume zwischen 1 und 10 Sekunden denkbar.

Die Dauer des zweiten Zeitraumes sollte so gewählt werden, dass die Einschwingzeit des Messkreises im Wesentlichen umfasst wird. Da auch hier, je nach Ausgestaltung des Messkreises, sehr unterschiedliche Kapazitäten des Messkreises und somit sehr unterschiedliche Einschwingzeiten denkbar sind, kommen in verschiedenen Ausgestaltungen der Erfindung auch für die Dauer des zweiten Zeitraumes unterschiedliche Werte in Frage, insbesondere Zeiträume zwischen 100 Millisekunden und 1 Sekunde oder Zeiträume zwischen 3 und 10 Sekunden.

Gemäß einer Ausgestaltung der Erfindung ist vorgesehen, dass unmittelbar zu Beginn des zweiten Zeitraumes ein Nullpunktsignal ausgelesen wird und die Berechnung der Fließgeschwindigkeit basierend auf dem Nullpunktsignal und dem Nutzsignal, insbesondere basierend auf der Differenz zwischen Nullpunktsignal und Nutzsignal, erfolgt. Durch Differenzbildung zwischen Nullpunkt- und Nutzsignal kann auch eine eventuell trotz des Kurzschlusses der Elektroden verbleibende Driftspannung, die nicht auf den Fluss des Mediums zurückzuführen ist, herausgerechnet werden. In weiteren Ausgestaltungen wäre es auch denkbar, dass vor der Messung des Nutzsignals mehr als ein Signal zur Bestimmung des Nullpunkts oder zur anderweitigen Eichung aufgenommen und zur Berechnung der Fließgeschwindigkeit verwendet wird.

In einer weiteren Ausgestaltung der Erfindung ist vorgesehen, dass die Auswertungseinheit eine Filterschaltung zum Unterdrücken von hochfrequenten Störsignalen aufweist. Eine derartige Filterschaltung kann z. B. als einfacher Tiefpassfilter ausgestaltet sein, da in den meisten Anwendungen davon auszugehen ist, dass die Fließgeschwindigkeit des Mediums nur langsamt variiert. Es sind aber auch aufwändigere Filter, z. B. aktive Filter oder statistische Filtermethoden, denkbar.

In einer weiteren Ausgestaltung der Erfindung ist vorgesehen, dass die Auswertungseinheit dazu ausgebildet ist, die Fließgeschwindigkeit mittels einer Kalibrationstabelle zu berechnen. Wie oben bereits ausgeführt, können bei der Messvorrichtung und dem Verfahren gemäß vorliegender Erfindung die aus dem Stand der Technik bekannten Formeln zur Berechnung der Fließgeschwindigkeit verwendet werden. Diese Formeln nehmen z. B. an, dass ein linearer Zusammenhang zwischen an den Elektroden gemessener Spannung und der Fließgeschwindigkeit des Mediums besteht. In der Praxis hat sich allerdings gezeigt, dass häufig Nichtlinearitäten auftreten, die von der jeweiligen Ausgestaltung und möglicherweise sogar von Gegebenheiten beim Einbau der Messvorrichtung, z. B. in ein Rohr, abhängen. Vorteilhafterweise wird daher eine Kalibrierung vorgenommen, d. h. die Messvorrichtung wird mit einem Medium mit bekannter Fließgeschwindigkeit durchflossen und die dabei entstehende Elektrodenspannung abgegriffen und in einer Tabelle abgelegt. Die Kalibrationstabelle kann in der Auswertungseinheit abgelegt und die Fließgeschwindigkeit anhand der Tabelle berechnet werden. Alternativ ist auch denkbar, dass die Auswertungseinheit zuerst nur die Signale der Elektroden speichert und eine nachträgliche Eichung erfolgt, d. h. die Fließgeschwindigkeiten für aufgezeichnete Spannungswerte der Elektroden erst nachträglich berechnet werden.

Um die oben beschriebenen Funktionalitäten auf der Auswertungseinheit zu ermöglichen, kann insbesondere vorgesehen sein, dass die Auswertungseinheit einen Mikrocontroller aufweist. Ebenso kann vorgesehen sein, dass der Mikrocontroller ein an der Messvorrichtung angebrachtes Display steuert, sodass die aktuelle Fließgeschwindigkeit oder das Gesamtvolumen des durchgeflossenen Mediums abgelesen werden können. Vorteilhafterweise weist die Messvorrichtung zudem eine Schnittstelle auf, mit der die erfassten Werte an einen Computer übertragen werden können bzw. über die Kalibrierungsdaten aus der Messvorrichtung abgelegt werden können.

Die Elektroden der Messvorrichtung weisen vorteilhafterweise Oberflächen mit hoher Güte auf, so dass elektrische Anlagerungen minimiert werden und eine Ablösung der Anlagerungen vereinfacht wird.

Die Erfindung wird durch die Ansprüche definiert.

Ausführungsbeispiele der Erfindung sind in den Zeichnungen dargestellt und werden in der nachfolgenden Beschreibung näher erläutert. Es zeigen:
Fig. 1a eine schematische Darstellung einer erfindungsgemäßen Messvorrichtung, bei der die Signalauskopplung nach dem galvanischen Prinzip stattfindet;
Fig. 1b eine schematische Darstellung einer erfindungsgemäßen Messvorrichtung, bei der die Signalauskopplung nach dem kapazitiven Prinzip stattfindet;
Fig. 2 ein stark vereinfachtes Schaubild des Spannungsverlaufs an den Elektroden einer erfindungsgemäßen Messvorrichtung;
Fig. 3 eine perspektivische Abbildung einer erfindungsgemäßen Messvorrichtung;
Fig. 4a eine Seitenansicht der Messvorrichtung aus Fig. 3;
Fig. 4b, 4c Querschnittsansichten der in Fig. 3 und 4a gezeigten Messvorrichtung.

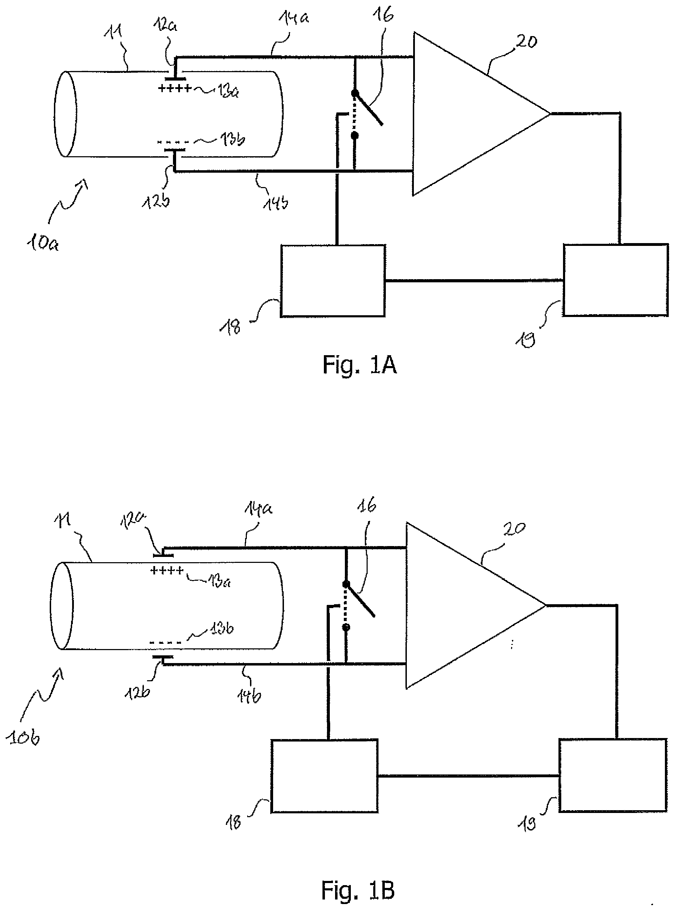

In Fig. 1a ist eine vereinfachte Darstellung einer Messvorrichtung gemäß der vorliegenden Erfindung mit galvanischer Signalauskopplung gezeigt. Die Messvorrichtung 10a weist dabei zwei Elektroden 12a, 12b auf, die mit dem durch ein Rohr 11 fließenden Medium in Kontakt sind. Nicht gezeigt ist ein Magnet, der ein (in die Zeichnungsebene hinein gerichtetes) Magnetfeld erzeugt. Bei fließendem Medium kommt es hierdurch zur Ladungstrennung und zur Anlagerung von positiven Teilchen 13a bzw. negativen Teilchen 13b an den Oberflächen der Elektroden 12a, 12b. Die Elektroden 12a, 12b sind über Zuleitungen 14a, 14b mit einem Schalter 16 sowie einem Differenzverstärker 20 verbunden. Der Schalter 16 ist zu den Eingängen des Differenzverstärkers 20 parallelgeschaltet. Der Differenzverstärker weist vorteilhafterweise eine sehr geringe Temperaturabhängigkeit und einen geringen Offset-Drift auf.

Der Schalter 16 wird geschaltet durch eine Ansteuereinheit 18, wobei die Ansteuereinheit 18 einen (nicht gezeigten) Timer aufweist und auch eine Auswertungseinheit 19 ansteuert. Die Auswertungseinheit 19 weist einen (nicht gezeigten) Analog/Digital-Wandler und eine Speichereinheit auf.

Fig. 1b zeigt ein erfindungsgemäßes Ausführungsbeispiel einer Messvorrichtung 10b mit kapazitiver Signalauskopplung. Die Elektroden 12a, 12b sind also außerhalb des Rohres 11 angeordnet. Die Verschaltung der übrigen Elemente entspricht der Verschaltung der Elemente in der Messvorrichtung 10a mit galvanischer Signalauskopplung.

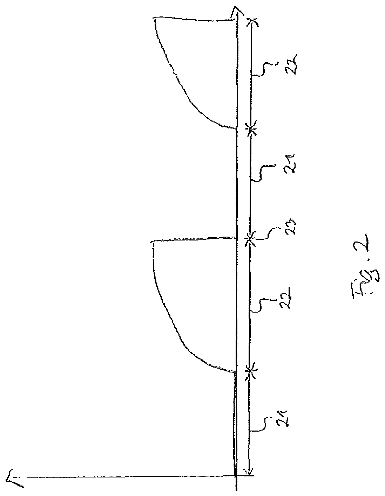

In Fig. 2 ist das (hier nur stark vereinfacht skizzierte) Schaubild eines Spannungsverlaufes an den Elektroden einer erfindungsgemäßen Messvorrichtung gezeigt. Während eines ersten Zeitraumes 21 ist der Schalter geschlossen, sodass die Elektroden und die Eingänge des Differenzverstärkers kurzgeschlossen sind. Nach dem ersten Zeitraum ist der Schalter für einen zweiten Zeitraum 22 geöffnet. Unmittelbar nach Öffnen des Schalters liegt eine erste Spannung an den Elektroden an. Diese erste Spannung kann als Nullpunktsignal gemessen werden und zur Berechnung eines korrigierten Signals verwendet werden. Während des zweiten Zeitraumes 22 findet ein Einschwingen statt, dessen Verlauf unter Anderem von der Kapazität des Messschaltkreises abhängt. Typischerweise kommt es dabei zu einem Anstieg der Spannung, wobei der Spannungsanstieg allmählich abflacht. Nach Ablauf des zweiten Zeitraumes findet während eines dritten, sehr kurzen und somit in dem Schaubild als Zeitpunkt dargestellten Zeitraumes 23 eine Messung des Nutzsignals statt. Zum Beispiel könnte die Messung während eines Zeitraums von 1 µs erfolgen. Nach der Messung des Nutzsignals wird der Schalter wieder für einen ersten Zeitraum geschlossen und es beginnt ein neuer Zyklus.

Je nach Ausgestaltung der Messvorrichtung, insbesondere der Elektroden und des Messschaltkreises, können sich auch ganz andere Spannungsverläufe ergeben.

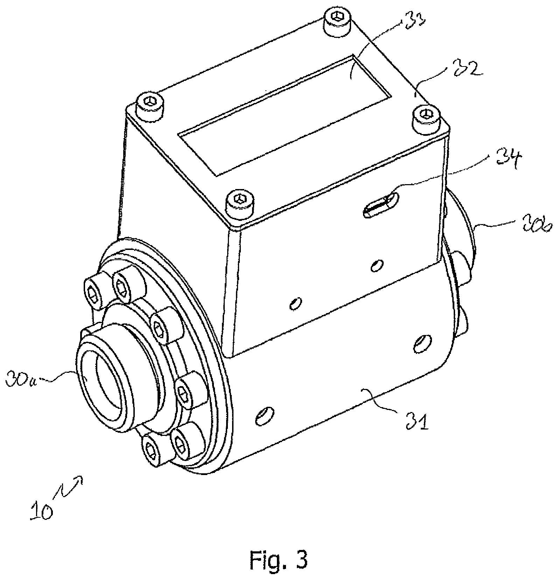

Fig. 3 zeigt eine perspektivische Ansicht einer erfindungsgemäßen Messvorrichtung 10. Die Messvorrichtung 10 weist dabei Öffnungen 30a, 30b zum Ein- bzw. Austritt des Mediums auf. Die Messvorrichtung 10 hat zudem eine metallische, zylinderförmige Ummantelung 31. Die Ummantelung 31 weist dabei möglichst wenige Aussparungen und Öffnungen aus, um Störsignale möglichst zu unterdrücken. Auf die Ummantelung 31 aufgesetzt ist ein Gehäuse 32 für die Auswertungseinheit und die Ansteuereinheit. Die Auswertungseinheit und die Ansteuereinheit können z.B. auf dem Mikrocontroller realisiert sein. Das Gehäuse 32 weist eine Öffnung für eine USB-Buchse 34 auf, sodass ein Mikrocontroller der Messvorrichtung 10 mit einem Computer verbunden werden kann. Die Messvorrichtung hat zudem ein Display 33, auf dem die aktuelle Fließgeschwindigkeit und das gesamte durchgeflossene Volumen des Mediums abgelesen werden können.

Die in Fig. 3 gezeigte Messvorrichtung weist keinen Anschluss für eine externe Stromversorgung auf, sondern wird über eine integrierte Batterie versorgt. Somit lassen sich Störeinflüsse durch Schwankungen einer externen Stromversorgung verhindern.

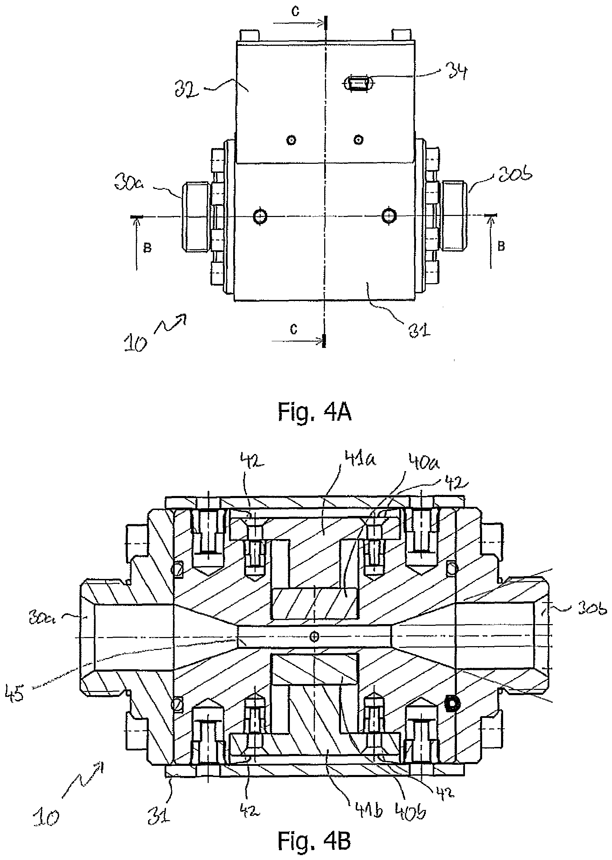

Fig. 4a zeigt eine Seitenansicht auf die in Fig. 3 gezeigte Messvorrichtung.

Fig. 4b zeigt einen Querschnitt durch die Messvorrichtung aus Fig. 4a und Fig. 3. Der Querschnitt zeigt dabei Magneten 40a, 40b, die auf gegenüberliegenden Seiten einer Durchführung 45 angeordnet sind. Die Magneten 40a, 40b werden dabei durch mit Schrauben 42 am Gehäuse befestigten Halterungen 41a, 41b in ihrer Position geholten. Wenn die zylinderförmige Ummantelung 31 abgenommen wird, sind die Schrauben 42 zugänglich und die Halterungen können gelöst und entfernt werden. Somit werden die Magneten 41a und 41b zugänglich und können ausgetauscht werden.

Wie aus der Querschnittansicht in Fig. 4B ersichtlich ist, haben die Öffnungen 30a, 30b größere Durchmesser als die Durchführung 45. Somit wird in der Durchführung 45 eine erhöhte Fließgeschwindigkeit erreicht. Es ist aber in anderen Ausgestaltungen auch denkbar, dass die Durchführung den gleichen oder einen größeren Durchmesser als die Öffnungen aufweist.

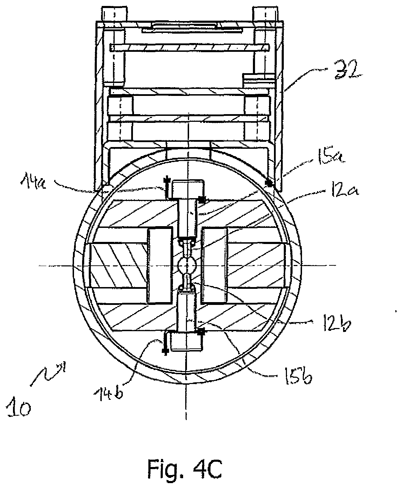

Fig. 4C zeigt eine Querschnittsansicht durch die Ebene, in der die Elektroden 12a, 12b angeordnet sind. Die Elektroden sind dabei an Basiskörpern 15a, 15b befestigt. Die Basiskörper 15a, 15b sind dabei, wenn die Ummantelung 31 abgenommen ist, von außen zugänglich, so dass die Elektroden 12a, 12b ggf. mit den Basiskörpern 15a, 15b ausgetauscht werden können.

In Fig. 4C nicht gezeigt ist der Mikrocontroller, auf dem sich die Ansteuereinheit und die Auswertungseinheit befinden. Der Mikrocontroller soll dabei in dem Gehäuse 32 angeordnet werden. Ebenso befinden sich der Schalter 16 und ein Verstärker 20 im Gehäuse 32. In anderen Ausführungsbeispielen kann aber auch vorgesehen sein, dass der Schalter 16 unmittelbar an den Elektroden 12a, 12b angeordnet ist, um einen möglichst geringen Kurzschlusswiderstand erzielen zu können. Die Zuleitungen 14a, 14b von den Elektroden 12a, 12b zum Schalter 16 und Verstärker 20 sind somit gemäß diesem Ausführungsbeispiel unterschiedlich lang. In anderen Ausführungsbeispielen kann vorgesehen sein, dass die Zuleitungen symmetrisch ausgebildet sind.

Die Zuleitungen 14a, 14b sind in Fig. 4C nur verkürzt dargestellt. Vorteilhafterweise kommen für die Zuleitungen verstärkte Drähte oder Litzen zum Einsatz, so dass ein geringer Kurzschlusswiderstand erreicht wird.

## Patentansprüche

1. Messvorrichtung zur Messung der Fließgeschwindigkeit eines elektrisch leitfähigen Mediums in einem von einem Magnetfeld durchsetzten Volumen, aufweisend ein Mittel zur Erzeugung des Magnetfelds, zumindest zwei Elektroden und
eine Auswertungseinheit, die ein Signal der Elektroden auswertet und die Fließgeschwindigkeit berechnet,
**dadurch gekennzeichnet, dass** die zumindest zwei Elektroden mit einem Schalter verbunden sind, der dazu ausgebildet ist, die Elektroden kurzzuschließen, wobei die Ansteuereinheit derart ausgebildet ist, dass der Schalter für die Dauer eines ersten Zeitraums (21), geschlossen ist und für die Dauer eines zweiten Zeitraums (22) geöffnet ist, wobei ferner
die Auswertungseinheit derart ausgebildet ist, dass das Signal der Elektroden unmittelbar nach dem zweiten Zeitraum (22) als Nutzsignal ausgelesen wird und unmittelbar zu Beginn des zweiten Zeitraums (22) ein Nullpunktsignal ausgelesen wird und die Berechnung der Fließgeschwindigkeit basierend auf dem Nullpunktsignal und dem Nutzsignal erfolgt.

2. Messvorrichtung nach Anspruch 1, **dadurch gekennzeichnet, dass** der Schalter ein elektronischer Schalter ist.

3. Messvorrichtung nach Anspruch 1 oder 2, **dadurch gekennzeichnet, dass** der Schalter zumindest einen Transistor umfasst.

4. Messvorrichtung nach einem der vorherigen Ansprüche, **dadurch gekennzeichnet, dass** der Schalter zumindest einen MOSFET, insbesondere einen MOSFET in einem CMOS-IC, umfasst.

5. Messvorrichtung nach einem der vorherigen Ansprüche, **dadurch gekennzeichnet, dass** der Schalter im geöffneten Zustand einen Widerstand von zumindest 10 GOhm, insbesondere zumindest 100 GOhm aufweist.

6. Messvorrichtung nach einem der vorherigen Ansprüche, **dadurch gekennzeichnet, dass** der Schalter im eingeschalteten Zustand einen Widerstand von höchstens 1 Ohm, vorzugsweise höchstens 0,1 Ohm und besonders bevorzugt höchstens 10 mOhm aufweist.

7. Messvorrichtung nach einem der vorherigen Ansprüche, **dadurch gekennzeichnet, dass** die Messvorrichtung eine Ansteuereinheit für den Schalter aufweist, wobei die Ansteuereinheit zumindest einen Timer umfasst.

8. Messvorrichtung nach Anspruch 7, **dadurch gekennzeichnet, dass** der erste Zeitraum (21) zwischen 0,3 und 1 Sekunden lang ist und/oder der zweite Zeitraum (22) zwischen 1 und 3 Sekunden lang ist.

9. Messvorrichtung nach einem der vorherigen Ansprüche, **dadurch gekennzeichnet, dass** die Auswertungseinheit eine Filterschaltung zum Unterdrücken von hochfrequenten Störsignalen aufweist.

10. Messvorrichtung nach einem der vorherigen Ansprüche, **dadurch gekennzeichnet, dass** die Auswertungseinheit dazu ausgebildet ist, die Fließgeschwindigkeit mittels einer Kalibrationstabelle zu berechnen.

11. Verfahren zur Messung der Fließgeschwindigkeit eines elektrisch leitfähigen Mediums in einem von einem Magnetfeld durchsetzten Volumen mit zumindest zwei Elektroden, mit den Schritten:
Kurzschließen der Elektroden während eines ersten Zeitraums (21),
öffnen des Kurzschlusses während eines zweiten Zeitraums (22),
Auslesen eines Nutzsignals von den Elektroden, wobei unmittelbar zu Beginn des zweiten Zeitraums (22) ein Nullpunktsignal ausgelesen wird und die Berechnung der Fließgeschwindigkeit basierend auf dem Nullpunktsignal und dem Nutzsignal erfolgt, wobei
die Verfahrensschritte periodisch durchgeführt werden

12. Verfahren nach Anspruch 11, **dadurch gekennzeichnet, dass** das Auslesen des Nutzsignals unmittelbar nach dem zweiten Zeitraum (22) erfolgt.

13. Verfahren nach Anspruch 11 oder 12, **dadurch gekennzeichnet, dass** die Berechnung basierend auf der Differenz zwischen Nullpunktsignal und Nutzsignal erfolgt.

14. Verfahren nach einem der Ansprüche 11 bis 13, **dadurch gekennzeichnet, dass** der erste Zeitraum zwischen 0,3 und 1 Sekunde lang ist und/oder der zweite Zeitraum zwischen 0,3 und 1 Sekunden lang ist.

## Claims

1. Measuring device for measuring the flow velocity of an electrically conductive medium in a volume permeated by a magnetic field, comprising a means for generating the magnetic field, at least two electrodes and
an evaluation unit which evaluates a signal from the electrodes and calculates the flow velocity,
**characterized in that** the at least two electrodes are connected to a switch which is configured to short-circuit the electrodes, wherein a drive unit is configured such that the switch is closed for the duration of a first period (21) and is open for the duration of a second period (22), wherein further
the evaluation unit is configured such that the signal of the electrodes is read out as use signal immediately after the second period (22) and a zero-point signal is read out immediately at the beginning of the second period (22) and the calculation of the flow velocity is based on the zero-point signal and the use signal.

2. Measuring device according to claim 1, **characterized in that** the switch is an electronic switch.

3. Measuring device according to claim 1 or 2, **characterized in that** the switch comprises at least one transistor.

4. Measuring device according to one of the preceding claims, **characterized in that** the switch comprises at least one MOSFET, in particular a MOSFET in a CMOS-IC.

5. Measuring device according to one of the preceding claims, **characterized in that** the switch comprises a resistance of at least 10 GOhm, in particular at least 100 GOhm in the open state.

6. Measuring device according to one of the preceding claims, **characterized in that** the switch comprises a resistance of at most 1 Ohm, preferably at most 0.1 Ohm and particularly preferably at most 10 mOhm in the switched-on state.

7. Measuring device according to one of the preceding claims, **characterized in that** the measuring device comprises a control unit for the switch, the control unit comprising at least one timer.

8. The measuring device according to claim 7, **characterized in that** the first period (21) is between 0.3 and 1 seconds long and/or the second period (22) is between 1 and 3 seconds long.

9. Measuring device according to one of the preceding claims, **characterised in that** the evaluation unit comprises a filter circuit for suppressing high-frequency interference signals.

10. Measuring device according to one of the preceding claims, **characterized in that** the evaluation unit is designed to calculate the flow velocity by means of a calibration table.

11. Method for measuring the flow velocity of an electrically conductive medium in a volume permeated by a magnetic field with at least two electrodes, comprising the steps
short-circuit the electrodes during a first period (21),
open the short circuit during a second period (22),
reading out a use signal from the electrodes, wherein a zero-point signal is read out immediately at the beginning of the second period (22) and the calculation of the flow velocity is carried out based on the zero-point signal and the use signal, wherein the procedural steps are carried out periodically

12. Method according to claim 11, **characterized in that** the reading out of the use signal takes place immediately after the second period (22).

13. Method according to claim 11 or 12, **characterized in that** the calculation is based on the difference between the zero-point signal and the use signal.

14. Method according to any one of claims 11 to 13, **characterized in that** the first period is between 0.3 and 1 seconds long and/or the second period is between 0.3 and 1 seconds long.

## Revendications

1. Dispositif de mesure pour mesurer la vitesse d'écoulement d'un milieu électriquement conducteur dans un volume traversé par un champ magnétique, comprenant un moyen pour générer le champ magnétique, au moins deux électrodes et une unité d'analyse qui analyse un signal provenant des électrodes et calcule la vitesse d'écoulement, **caractérisé en ce que** lesdites au moins deux électrodes sont reliées à un interrupteur qui est conçu pour court-circuiter les électrodes, l'unité de commande étant conçue de telle sorte que l'interrupteur soit fermé pendant la durée d'une première période de temps (21) et soit ouvert pendant la durée d'une deuxième période de temps (22), l'unité d'analyse étant en outre conçue de telle manière que le signal des électrodes soit lu en tant que signal utile immédiatement après la deuxième période de temps (22) et qu'un signal de point zéro soit lu immédiatement au début de la deuxième période de temps (22), et le calcul de la vitesse d'écoulement est effectué sur la base du signal de point zéro et du signal utile.

2. Dispositif de mesure selon la revendication 1, **caractérisé en ce que** l'interrupteur est un interrupteur électronique.

3. Dispositif de mesure selon la revendication 1 ou la revendication 2, **caractérisé en ce que** l'interrupteur comprend au moins un transistor.

4. Dispositif de mesure selon l'une des revendications précédentes, **caractérisé en ce que** l'interrupteur comprend au moins un MOSFET, en particulier un MOSFET dans un CMOS-IC.

5. Dispositif de mesure selon l'une des revendications précédentes, **caractérisé en ce que** l'interrupteur a, à l'état ouvert, une résistance d'au moins 10 GOhm, en particulier d'au moins 100 GOhm.

6. Dispositif de mesure selon l'une des revendications précédentes, **caractérisé en ce que** l'interrupteur, à l'état de service, a une résistance d'au plus 1 Ohm, de préférence d'au plus 0,1 Ohm, et de façon particulièrement préférée d'au plus 10 mOhm.

7. Dispositif de mesure selon l'une des revendications précédentes, **caractérisé en ce que** le dispositif de mesure comporte une unité de commande de l'interrupteur, l'unité de commande comprenant au moins une minuterie.

8. Dispositif de mesure selon la revendication 7, **caractérisé en ce que** la première période de temps (21) a une durée comprise entre 0,3 et 1 seconde et/ou la deuxième période de temps (22) a une durée comprise entre 1 et 3 secondes.

9. Dispositif de mesure selon l'une des revendications précédentes, **caractérisé en ce que** l'unité d'analyse comprend un circuit de filtrage pour supprimer les signaux parasites à haute fréquence.

10. Dispositif de mesure selon l'une des revendications précédentes, **caractérisé en ce que** l'unité d'analyse est conçue pour calculer la vitesse d'écoulement au moyen d'une table d'étalonnage.

11. Procédé pour mesurer la vitesse d'écoulement d'un milieu électriquement conducteur dans un volume traversé par un champ magnétique avec au moins deux électrodes, ayant les étapes suivantes :
court-circuiter des électrodes pendant une première période de temps (21),
ouvrir le court-circuit pendant une deuxième période de temps (22),
lire un signal utile à partir des électrodes, un signal de point zéro étant lu immédiatement au début de la deuxième période de temps (22) et le calcul de la vitesse d'écoulement étant effectué sur la base du signal de point zéro et du signal utile,
les étapes du procédé étant effectuées périodiquement.

12. Procédé selon la revendication 11, **caractérisé en ce que** la lecture du signal utile a lieu immédiatement après la deuxième période de temps (22).

13. Procédé selon la revendication 11 ou la revendication 12, **caractérisé en ce que** le calcul est basé sur la différence entre le signal de point zéro et le signal utile.

14. Procédé selon l'une quelconque des revendications 11 à 13, **caractérisé en ce que** la première période de temps a une durée de 0,3 à 1 seconde et/ou la deuxième période de temps a une durée de 0,3 à 1 seconde.
